# EUROPÄISCHE PATENTSCHRIFT

(11) **EP 0 944 888 B1**
(45) Veröffentlichungstag und Bekanntmachung des Hinweises auf die Patenterteilung: **10.10.2001**
(21) Anmeldenummer: 97951150.8
(22) Anmeldetag: 08.11.1997
(51) Int. Cl.: G08C 15/00, H04L 25/38

(54) **VERFAHREN UND SCHALTUNGSANORDNUNG ZUR ÜBERTRAGUNG VON DREHZAHLINFORMATIONEN UND ZUSATZDATEN**
METHOD AND CIRCUIT FOR TRANSMITTING INFORMATION ON ROTATIONAL SPEED AND ADDITIONAL DATA
PROCEDE ET CIRCUIT POUR TRANSMETTRE DES DONNEES DE VITESSE DE ROTATION ET DES DONNEES SUPPLEMENTAIRES

(30) Priorität: 07.12.1996 DE 19650935
(43) Veröffentlichungstag der Anmeldung: 29.09.1999
(73) Patentinhaber: Continental Teves AG & Co. oHG, 60488 Frankfurt (DE)
(72) Erfinder: ZINKE, Olaf, D-65795 Hattersheim (DE); FEY, Wolfgang, D-65527 Niedernhausen (DE); ZYDEK, Michael, D-35428 Langgöns (DE); LORECK, Heinz, D-65510 Idstein (DE)
(74) Vertreter: Blum, Klaus-Dieter
(86) Internationale Anmeldenummer: EP9706209
(87) Internationale Veröffentlichungsnummer: WO9825148

(56) Entgegenhaltungen:
- WO-A-95/17680
- DE-A- 2 242 639
- DE-C- 4 323 619

## Beschreibung

Die Erfindung bezieht sich auf ein Verfahren zur Übertragung von Daten, die ein Drehzahlsensor liefert und die in Form eines Wechselsignals vorliegen, sowie von Zusatzdaten über eine gemeinsame Signalleitung. Schaltungsanordnungen zur Durchführung des Verfahrens gehören ebenfalls zur Erfindung.

Drehzahlsensoren werden unter anderem in der Kraftfahrzeugtechnik benötigt, um eine der wichtigsten Eingangsgrößen vieler Fahrzeug-Regelungssysteme zu gewinnen. So sind beispielsweise bekannte Antiblockiersysteme (ABS), Antriebsschlupfregelungen (ASR) und Fahrstabilitätsregelungen (FSR, ASMS) auf das ständige Messen und Auswerten des Drehverhaltens der einzelnen Fahrzeugräder angewiesen. Die Drehzahldaten jedes einzelnen Rades werden erfaßt und über ein Kabel zu einer Auswerteelektronik übertragen.

Es gibt Drehzahlsensoren sehr unterschiedlicher Art und Leistungsfähigkeit. Die in Kraftfahrzeugen eingesetzten Sensoren bestehen grundsätzlich aus einem mit dem Rad rotierenden Encoder in Gestalt einer Zahnscheibe, Lochscheibe etc. und aus einem ortsfesten Meßwertaufnehmer. Aus technologischen und preislichen Gründen wurden bisher induktive Sensoren bw. Meßwertaufnehmer bevorzugt, in denen der Encoder ein der Drehbewegung des Rades entsprechendes Wechselsignal hervorruft. Die Frequenz des Wechselsignals wird in unterschiedlicher Weise zur Gewinnung der Drehzahlinformation ausgewertet.

So ist in der DE-A-43 23 619 eine Einrichtung zur zeitmultiplexen Übertragung von einer Mehrzahl von Sensorsignalen, die mittels eines Datenkonzentrators erfaßt und an ein Steuergerät übertragen werden, beschrieben. Zur Anstreuerung der einzelnen Sensoren werden Reset- und Kanalwahlimpulse auf die Versorgungsspannung aufgesetzt, wobei sich die Reset- und Kanalwahlimpulse voneinander duch Ihre Amplitude unterscheiden.

Aus der DE-A-22 42 639 geht ein Zeitmultiplex-Telegraphiesystem für zeichenweise Verschachtelung hervor.

Aktive Drehzahlsensoren gewinnen an Bedeutung. Ein solcher aktiver Sensor ist bereits in der WO 95/17680 (P 7805) beschrieben. Der ortsfeste Teil des Sensors enthält bei solchen aktiven Sensoren z.B. ein magnetoresistives Sensorelement mit einem als Vorspannmagnet dienenden Permanentmagneten und außerdem elektronische Schaltkreise. Ein aktiver Sensor benötigt eine Stromversorgung. Das Ausgangssignal des aktiven Sensors ist ein binäres Stromsignal, das sich aus eingeprägten Strömen unterschiedlicher Amplitude zusammensetzt. Die Drehzahlinformation steckt in der Frequenz bzw. in dem Wechsel zwischen den beiden Strom-Niveaus. Bekannte Sensoren dieser Art rufen ein Rechtecksignal hervor, dessen Frequenz die gemessene Drehzahl wiedergibt.

Bei Kraftfahrzeug-Regelungssystemen der hier beschriebenen Art sind die Herstellungskosten für die Vermarktung von entscheidender Bedeutung. Der Aufwand für die Erfassung des

Drehverhaltens aller Räder, die Übertragung und Auswertung der Informationen ist relativ hoch. Hinzu kommt, daß noch weitere, an jedem Rad anfallende Informationen unterschiedlicher Art, wie Bremsbelagverschleiß, Luftspalt zwischen Encoder und Sensor, Bremsentemperatur oder Bremsflüssigkeitstemperatur, Bremsflüssigkeitszustand etc., ermittelt und zur Auswerteschaltung übertragen werden müssen.

Der Erfindung liegt nun die Aufgabe zugrunde, den Gesamtaufwand für die Messung und Auswertung der am Rad sensierten Informationen und den Aufwand für die Übertragung der gemessenen Daten von den Rädern zu der Auswerteschaltung (Kabelaufwand) zu verringern oder, anders betrachtet, die Nutzung der Verkabelung zwischen den einzelnen (aktiven) Sensoren und der zentralen Auswerteschaltung zu verbessern.

Es hat sich herausgestellt, daß diese Aufgabe mit dem im Anspruch 1 beschriebenen Verfahren bzw. mit einer Schaltungsanordnung gemäß Anspruch 12 gelöst werden kann, dessen Besonderheit darin besteht, daß aus dem Wechselsignal eine Folge von Pulsen vorgegebener Dauer gewonnen wird, deren Abstände oder Pulspausen die Drehzahlinformation enthalten, und daß in den Pulspausen die Zusatzdaten übertragen werden, wobei durch die einzelnen Pulse die Übertragung der Zusatzdaten ausgelöst oder synchronisiert wird.

Die Erfindung beruht also auf der Erkenntnis, daß das Kabel - Eindraht- oder Zweidrahtkabel - zwischen den einzelnen Radsensoren und der zentralen Auswerteelektronik zusätzlich auch für die Übertragung weiterer Raddaten, z.B. über den Bremsbelagverschleiß, den Luftspalt zwischen dem Encoder und dem Drehzahl-Sensorelement, über die Temperatur am Rad, über den Einfederweg der Schwingungsdämpfer und/oder über vieles andere mehr verwendet werden kann und daß dies, wenn das erfindungsgemäße Verfahren zur Anwendung kommt, ohne jeglichen Mehraufwand möglich ist.

Nach einem Ausführungsbeispiel des erfindungsgemäßen Verfahrens sind die Zusatzdaten in einer Folge binärer Signale oder in einer Bit-Folge enthalten, die im Anschluß an jeden Sensorpuls oder Synchronisierpuls übertragen wird. Die Gesamtdauer der Signalfolge oder Bit-Folge ist dabei zweckmäßigerweise kürzer als die bei höchster Drehzahl auftretende Pulspause zwischen den aufeinanderfolgenden Sensorpulsen.

Ferner hat es sich als vorteilhaft erwiesen, wenn die Zeitbasis für die Sendepulse und für die binären Signale, die die Zusatzdaten enthalten, mit Hilfe einer gemeinsamen Oszillator- oder Taktgeberschaltung gewonnen wird. An die Frequenzgenauigkeit eines solchen Oszillators sind dabei nur geringe Anforderungen zu stellen.

Des weiteren ist es vorteilhaft, zur Drehzahlbestimmung einen aktiven Sensor, der die Drehzahldaten in Form von eingeprägten Strömen unterschiedlicher Amplitude liefert, zu verwenden und auch die Zusatzdaten in Form von Strömen vorgegebener Amplitude zu übertragen. In diesem Falle werden auf der Übertragungsleitung ein Stromgrundwert, der zum Betrieb des aktiven Sensors ausreicht, ein mittlerer Stromwert zur Übertragung der Zusatzdaten und ein oberer Stromwert zur Darstellung der Sensorpulse vorgegeben. Dabei kann außerdem das Unterschreiten eines bestimmten Strom-Mindestwertes sowie das Überschreiten eines Strom-Maximalwertes auf der Übertragungsleitung zur Fehlererkennung - Leitungsunterbrechung, Kurzschluß gegen Masse oder Batterie usw. - dienen.

Eine weitere Verbesserung des erfindungsgemäßen Verfahrens wird erreicht, wenn bei einer Radstillstandserkennung bzw. beim Ausbleiben eines Sensorpulses über eine vorgegebene Zeitspanne hinaus ein sekundärer oder Hilfs-Synchronisierpuls erzeugt wird, der die Übertragung der Zusatzdaten auslöst. Es gibt nämlich Raddaten, wie Bremsbelagverschleißanzeige und viele andere, die durchaus auch bei Stillstand des Fahrzeugs übertragen und ausgewertet werden sollten.

Die Übertragung der Radsensordaten hat jedoch Priorität. Erfindungsgemäß wird daher, wenn während einer Übertragung von Zusatzdaten - ausgelöst durch den sekundären Synchronisierpuls, ein Sensorpuls auftritt, der Datenfluß unterbrochen und durch den Sensorpuls erneut gestartet.

In den beigefügten Unteransprüchen sind noch weitere vorteilhafte Ausführungsbeispiele der Erfindung und Schaltungsanordnungen zur Durchführung des Verfahrens beschrieben.

Weitere Einzelheiten, Merkmale und Anwendungsmöglichkeiten der Erfindung gehen aus der folgenden Beschreibung von Ausführungsbeispielen anhand der beigefügten Abbildungen hervor.

Es zeigen in schematischer Vereinfachung und symbolischer Darstellungsweise:
- Fig. 1: den zeitlichen Verlauf des übertragenen Signals auf der Übertragungsleitung, nämlich ein sogenanntes Übertragungsprotokoll,
- Fig. 2: eine Darstellung zur Veranschaulichung der vorgegebenen Strom-Grenzwerte und Strom-Level,
- Fig. 3: a) bis c) weitere Diagramme zur Veranschaulichung des Stromverlaufs auf der Übertragungsleitung in Abhängigkeit von der Datenübertragung
- Fig. 4: im Blockschaltbild eine Schaltungsanordnung nach der Erfindung.

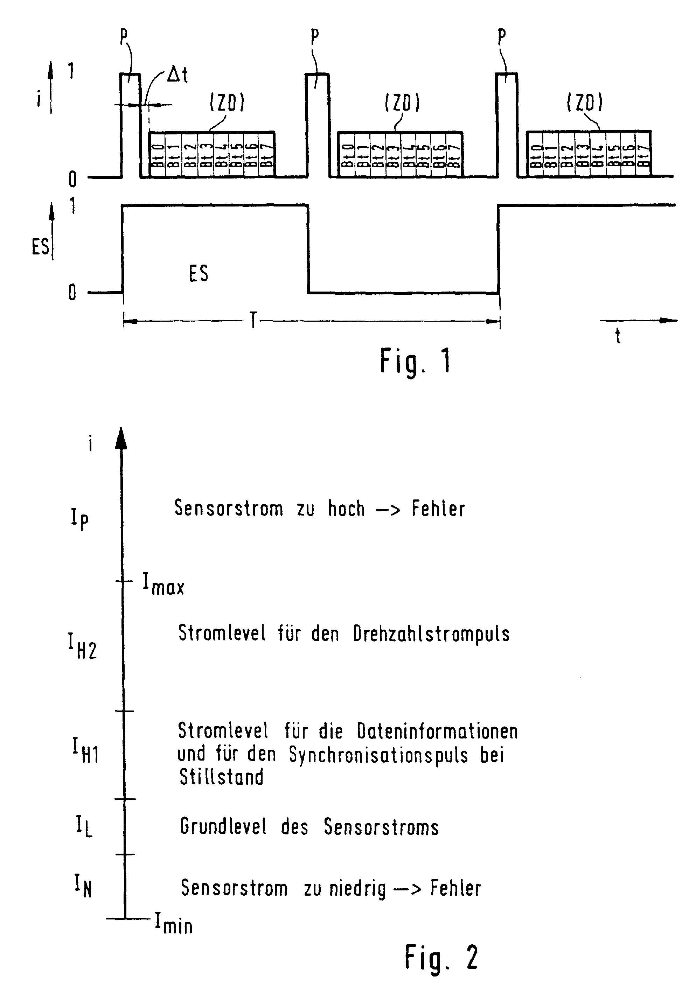

Fig. 1 dient zur Erläuterung der prinzipiellen Arbeitsweise und des Ablaufs des erfindungsgemäßen Verfahrens. Dargestellt ist der zeitliche Verlauf des Stroms i auf der Übertragungsleitung, die ein Fahrzeugrad mit der zentralen Auswerteelektronik verbindet. Über dieses Kabel sollen allerdings nicht nur die Drehzahlinformationen, sondern auch Zusatzinformationen, die mit einer Bremsbelagverschleißanzeige und/oder mit speziellen Sensoren gewonnen wurden, übertragen werden.

Der Verlauf des Encodersignals ES in Fig. 1 gibt die Relativbewegung des Encoders gegenüber dem ortsfesten Meßwertaufnehmer oder Drehzahlsensor in idealisierter Form wieder. Ein solches Wechselsignal, das zwischen den Werten 0 und 1 wechselt und dessen Frequenz oder Periodendauer T die Drehbewegung darstellt, steht am Ausgang eines Drehzahlsensors zur Verfügung. Bei einem aktiven Sensor stellen 0 und 1 bestimmte, eingeprägte Stromsignale oder Stromniveaus dar, deren Amplituden oder Höhen bekanntlich - im Gegensatz zu der Ausgangsspannung eines induktiven Sensors - unabhängig von der Drehzahl sind.

Das Stromniveau 0 symbolisiert einen relativ kleinen Stromwert, der lediglich zur Funktion oder Betrieb des aktiven Sensors ausreichen muß, während 1 einen vergleichsweise hohen Signalstrom darstellt.

Erfindungsgemäß wird bei jedem Signalwechsel 0/1 bzw. 1/0 (Flankenwechsel des Signalgeberrades bzw. Encoders) ein Drehzahlsensorpuls P erzeugt und über die Signalleitung übertragen. Dies hat eine erhebliche Reduzierung der Verlustleistung im Vergleich zu der Übertragung der Drehzahlsensorinformation mit Hilfe des Rechtecksignals ES zur Folge.

In den Pausen zwischen zwei aufeinanderfolgenden Sensorpulsen P werden erfindungsgemäß Zusatzdaten in Form einer Folge aus binären Signalen oder einer Bit-Folge Bt0 bis Bt7 übertragen.Dabei dient jeder Sensorpuls P gleichzeitig als Synchronisiersignal, das eine Übertragung der Zusatzdaten Bt0 bis Bt7 auslöst. Durch unterschiedliche Signalniveaus oder Stromamplituden für die Übertragung der Sensorpulse P und der Zusatzdaten Bt0 bis Bt7(ZD) ist auf einfachste Weise eine Trennung der Drehzahlsensordaten (ES) und der Zusatzdaten ZD (Bt0 bis Bt7) sichergestellt.

Das momentane Stromniveau bzw. "Stromlevel" auf der Datenübertragungsleitung wird zur Identifizierung der übertragenen Drehzahl- und Zusatzdaten, zur Trennung dieser Daten und zur Fehlererkennung ausgewertet. Dies wird im folgenden anhand der Fig. 2 erläutert:
Ein zu geringer, unter einem Minimum Iₘᵢₙ oder ein zu hoher, über einem Maximalwert Iₘₐₓ liegender Strom wird zur Fehlererkennung ausgewertet. Ein über diesem Minimalwert und innerhalb eines Toleranzbereichs I_{L} liegender "Strom-Grundwert" reicht für die Funktion eines aktiven Sensors aus; bekanntlich müssen nämlich aktive Sensoren ständig mit elektrischer Energie versorgt werden. Ein innerhalb eines Toleranzbereiches I_{H1} liegender "mittlerer Stromwert" steht für die Übertragung der Zusatzdaten ZD (Bt0 bis Bt7) zur Verfügung. Nach oben schließt sich, wie Fig. 2 zeigt, ein weiterer Toleranzbereich I_{H2} für einen "oberen Stromwert" an, der für den bei jedem Flankenwechsel auftretenden Sensorpuls reserviert ist.

Fig. 2 in Verbindung mit Fig. 1 veranschaulicht, daß mit der Erfindung ein einfaches, störsicheres, verlustarmes Verfahren zur Übertragung der Sensor- und Zusatzdaten zu realisieren ist.

Eine weitere Besonderheit der Erfindung besteht darin, daß auch bei Stillstand des Fahrzeugs und bei sehr niedrigen Drehzahlen eine Übertragung der Zusatzdaten erfolgt. Hierzu wird, wenn über eine vorgegebene Zeitspanne T hinaus kein Drehzahlsensorpuls P auftritt, ein Hilfs-Synchronisiersignal erzeugt, das in gleicher Weise wie ein Sensorpuls P eine Übertragung der Zusatzdaten ZD auslöst. Es gibt nämlich Informationen, die zu den hier als Zusatzdaten bezeichneten Informationen zählen, die auch bei Stillstand des Fahrzeugs übertragen und ausgewertet werden sollten.

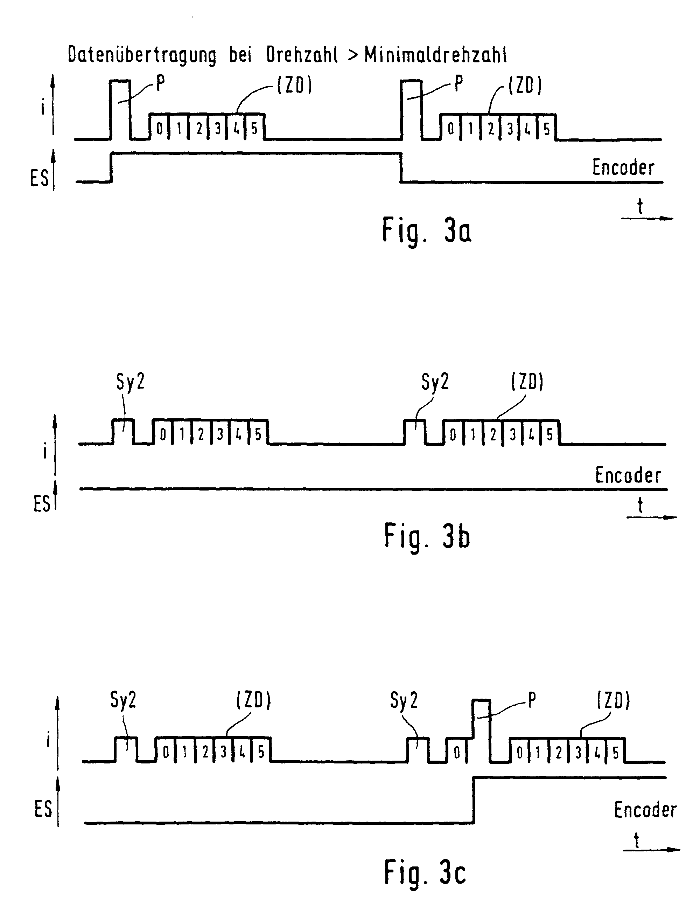

Fig. 3 dient zur Veranschaulichung der Datenübertragung bei rotierendem Rad (Fig. 3a), bei Fahrzeugstillstand (Fig. 3b) und bei sehr niedrigen Drehzahlen (Fig. 3c). Die Zusatzdaten ZD sind hier mit 0,1,2,3,4,5 symbolisiert.

Im Beispiel nach Fig. 3c tritt nach längerem Ausbleiben des Drehzahlsensorpulses und Auslösen der Zusatzdaten-Übertragung durch Hilfs-Synchronisierungspulse Sy2 erneut ein Sensorpuls P auf. Die Synchronisierung durch den Sensorpuls P hat Priorität, die in der Situation nach Fig. 3c gerade stattfindende Zusatzdaten-Übertragung wird unterbrochen und synchronisiert durch den Sendepuls P erneut gestartet.

Aus den Fig. 3b und 3c ist erkennbar, daß die Amplitude des Hilfs-Synchronisierpulses Sy2 in dem für die Zusatzdaten-Übertragung vorgesehenen Toleranzbereich I_{H1} liegt. Dadurch wird es auf einfache Weise möglich, den Drehzahlsensorpuls P von dem Hilfs-Synchronisierpuls Sy2 zu trennen.

Durch die Verwendung von "schmalen", d.h. kurzen Sensorstrompulsen P anstelle der Sensorstromsignale ES (vergleiche Fig. 1) entsteht im aktiven Sensor sowie in der elektronischen Auswerteschaltung nur noch ein Bruchteil der bisher benötigten Verlustleistung. Dadurch lassen sich die Baugröße (Chip-Fläche) und damit auch die Herstellungskosten senken. Das ursprüngliche, der Form des Encoders folgende Signal (Rechtecksignal ES in Fig. 1) kann durch einfache Frequenzhalbierung in bekannter Weise mit Hilfe eines flankengetriggerten Flip-Flop innerhalb der Auswerteschaltung reproduziert werden. Die Erzeugung eines Drehzahlsensorpulses P innerhalb des Sensors ist in de Praxis problemlos möglich, da solche Sensoren ohnehin für die Datenverarbeitung und - übertragung einen Oszillator benötigen.

Während der Pausen zwischen den Drehzahlsensorpulsen P wird, wie dies bereits erläutert wurde, die Übertragung der Zusatzdaten ZD durchgeführt. Diese Zusatzdaten (z.B. 8 Bit) werden in Form von Strompulsen (Bit-Pulsen, "0,1,2,3,4,5") übertragen. Soll für ein Bit der logische Zustand 1 übertragen werden, so wird während der für dieses Bit reservierten Zeitspanne ein Strompuls auf einem dritten Stromlevel (Stromniveau) erzeugt. Zweckmäßigerweise wird hierzu ein zwischen dem Grundlevel und dem Stromlevel des Sensorpulses liegender Strombereich festgelegt, wie dies anhand der Fig. 2 erläutert wurde.

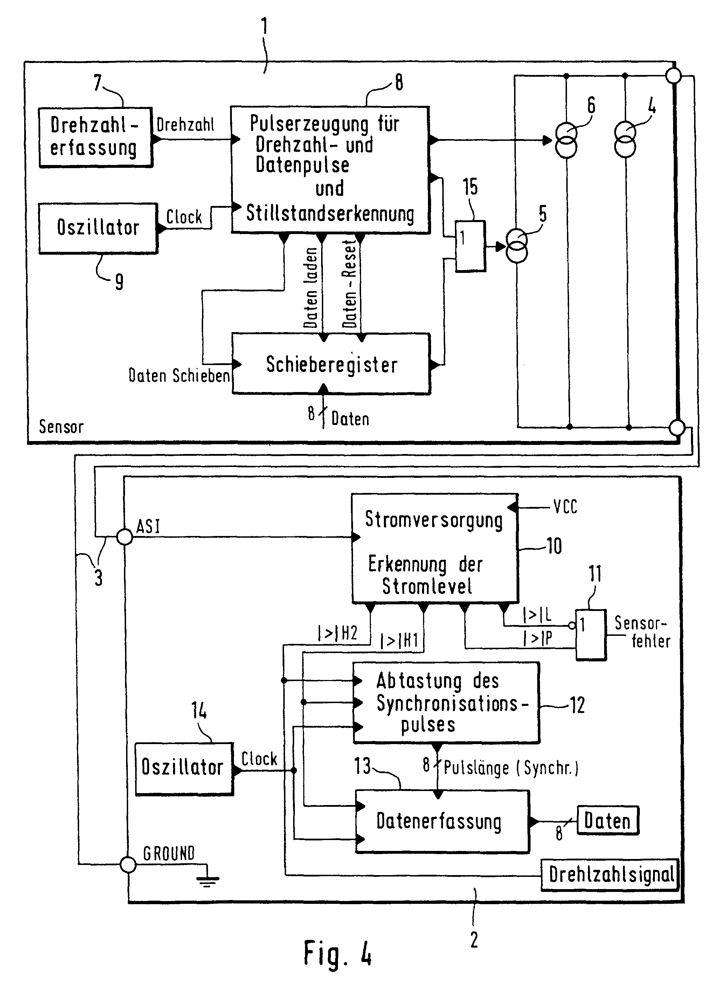

Fig. 4 zeigt ein Ausführungsbeispiel einer Schaltungsanordnung zur Durchführung des erfindungsgemäßen Verfahrens.

Die zu einem aktiven Sensor zählenden Komponenten sind in einem Block 1, die für die Auswertung der übertragenen Daten benötigten Komponenten in einem weiteren Block 2 zusammengefaßt. Eine Übertragungsleitung 3 verbindet Sensorblock 1 mit der Auswerteschaltung 2.

Die für den Betrieb des aktiven Sensors (1) und für die Datenübertragung benötigten Stromsignale werden nach Fig. 4 mit Hilfe der drei symbolisch dargestellten Stromquellen 4, 5 und 6 erzeugt. Den Grundwert des zum Betrieb des Sensors erforderlichen Stromes von z.B. 5 mA erzeugt eine Stromquelle 4. Zur Übertragung der Zusatzdaten (ZD) wird eine Stromquelle 5 mit einem eingeprägten Strom von ebenfalls z.B. 5 mA zugeschaltet. Die dritte Stromquelle 5, die in dem vorliegenden Ausführungsbeispiel für einen eingeprägten Strom von 10 mA ausgelegt ist, wird über ein ODER-Gatter 15 zusätzlich zu der Stromquelle 6 aktiviert, um für die Da er eines Sensorpulses P einen eingeprägten Strom von insgesamt 20 mA zur Verfügung zu stellen.

Zur Drehzahlerfassung ist im Inneren des aktiven Sensors (1) ein Sensorelement 7 vorgesehen, dessen Ausgangssignal mit Hilfe einer Pulserzeugungsschaltung und Signalaufberetung 8 die Stromquellen 5 allein oder die Stromquellen 5 und 6 aktiviert. Da die Datenpulse eine vorgeschriebene Zeitdauer haben, ist im Sensorblock 1 ein Oszillator 9 vorgesehen, der eine Zeitbasis schafft. Solche Oszillatoren lassen sich, wenn der Herstellungsaufwand gering sein soll, aufgrund der gro8en Schwankungsbreite der Versorgungsspannung und der starken Temperaturschwankungen nur mit relativ großen Frequenztoleranzen realisieren. Die Dauer der Datenpulse ist daher ebenfalls stark toleranzbehaftet. Um dennoch eine sichere Auswertung der übertragenen Sensor- und der Zusatzdaten zu ermöglichen, wird, wie zuvor erläutert wurde, mit Synchronisationspulsen gearbeitet.

Besonders vorteilhaft ist das anhand der Fig. 1 bereits beschriebene Übertragungsprotokoll, bei dem der Drehzahlsensorpuls P zugleich als Synchronisationspuls für die Übertragung der Zusatzdaten ZD verwendet wird. An die steigende Flanke eines Pulses P schließt sich eine Verweildauer auf dem oberen Stromlevel I_{H2} an. Diese Verweildauer entspricht der Zeitdauer einer durch die Logikschaltung im Sensor 1 bestimmten, vorgegebenen Anzahl von Oszillatorperioden. Zwischen dem Sensor- und Synchronisationspuls P und der Zusatzdatenübertragung wird eine vorgegebene, kurze Zeitspanne △t (siehe Fig. 1) eingehalten. Die Pulsbreiten der Drehzahlsensor- und Synchronisierpulse P und der Datenpulse Bt0 bis Bt7 werden so dimensioniert, daß auch bei höchster Raddrehzahl, bei der die Pause zwischen aufeinanderfolgenden Pulsen P am geringsten ist, eine vollständige Übertragung der Zusatzdaten Bt0 bis Bt7 (ZD) noch möglich ist.

Die Signalauswerteschaltung 8 enthält eine Zeitmeßvorrichtung, mit der die Breite der Synchronisationspulse ausgemessen wird. Aufgrund dieser Zeitmessung wird das Sensorstromsignal dann abgetastet, um die übertragenen Daten rückzugewinnen. Hierbei wird ausgenutzt, daß die Frequenzschwankungen des Oszillators 9 langsam sind im Vergleich zu dem zeitlichen Abstand △t zwischen dem Sensor- und Synchronisationspuls P und den übertragenen Daten Bt0 bis Bt7.

Die Erkennung der übertragenen Stromniveaus ist in einem Schaltblock 10 der Auswerteschaltung 2 untergebracht. Bei einem unter dem Minimalwert Iₘᵢₙ oder über dem Maximalwert Iₘₐₓ liegenden Strom wird über ein Oder-Gatter 11 das Vorliegen eines Fehlers (Kurzschluß, Nebenschluß, Leitungsunterbrechung) signalisiert. Die Abtastung der Synchronisationspulse P, Sy2, d.h. die Erkennung dieser Pulse und die Messung der Pulsdauer geschieht mit Hilfe einer Abtastschaltung 12. Zur Erfassung der Zusatzdaten ist ein Speicher 13 vorgesehen. Der Arbeitstakt für die Schaltungen 12 und 13 wird durch einen Oszillator 14 erzeugt. In dem Speicher 13 werden die übertragenen Zusatzdaten erfaßt und über einen Ausgang "Daten" für die Weiterverarbeitung zur Verfügung gestellt. Schließlich ist noch ein Ausgang "Drehzahlsignal" für die Weiterleitung der übertragenen Sensorinformationen vorhanden, an dem immer dann ein Signal liegt, wenn die übertragene Stromamplitude i im Toleranzbereich I_{H2} liegt.

## Patentansprüche

1. Verfahren zur Übertragung von Daten, die ein Drehzahlsensor liefert und die in Form eines Wechselsignals vorliegen, sowie von Zusatzdaten über eine gemeinsame Signalleitung, **dadurch gekennzeichnet, daß** aus dem Wechselsignal (ES) eine Folge von Pulsen (P) vorgegebener Dauer gewonnen wird, deren Abstände oder Pulspausen die Drehzahlinformationen enthalten, und daß in den Pulspausen die Zusatzdaten (ZD) übertragen werden, wobei durch die einzelnen Pulse (P) die Übertragung der Zusatzdaten (ZD; Bt0 bis Bt7; 0...5) gestartet bzw. synchronisiert wird.

2. Verfahren nach Anspruch 1, **dadurch gekennzeichnet, daß** die Zusatzdaten (ZD) in einer Folge binärer Signale (Bt0 bis Bt7; 0...5) oder in einer Bit-Folge enthalten sind, die im Anschluß an jeden Drehzahlsensor- oder Synchronisierpuls (P) übertragen werden.

3. Verfahren nach Anspruch 2, **dadurch gekennzeichnet, daß** die Zusatzdaten (ZD) in einer Bit-Folge (Bt0 bis Bt7; 0...5)enthalten sind, deren Gesamtdauer kürzer ist als die bei höchster Drehzahl auftretenden Pulspausen zwischen aufeinanderfolgenden Drehzahlsensorpulsen (P).

4. Verfahren nach einem oder mehreren der Ansprüche 1 bis 3, **dadurch gekennzeichnet, daß** die Zeitbasis für die Sensorpulse (P) und für die binären Signale(Bt0 bis Bt7; 0...5), die die Zusatzdaten (ZD) enthalten, mit Hilfe einer gemeinsamen Oszillator- oder Taktgeberschaltung (9) gewonnen wird.

5. Verfahren nach einem oder mehreren der Ansprüche 1 bis 4, **dadurch gekennzeichnet, daß** als Drehzahlsensor ein aktiver Sensor (1), der die Drehzahlinformationen in Form von eingeprägten Strömen liefert, verwendet wird, daß die Zusatzdaten (ZD; Bt0 bis Bt7; 0...5) ebenfalls durch Ströme vorgegebener Amplituden übertragen werden und daß auf der Übertragungsleitung (3) ein Strom-Grundwert (I_{L}), der zum Betrieb des aktiven Sensors ausreicht, ein mittlerer Stromwert (I_{H1}) zur Übertragung der Zusatzdaten (ZD; Bt0 bis Bt7; 0...5) sowie ein oberer Stromwert (I_{H2}) zur Darstellung der Sensorpulse (P) vorgegeben werden.

6. Verfahren nach Anspruch 5, **dadurch gekennzeichnet, daß** das Unterschreiten eines vorgegebenen Strom-Mindestwertes (Iₘᵢₙ) sowie das Überschreiten eines vorgegebenen Strom-Maximalwertes (Iₘₐₓ) auf der Übertragungsleitung zur Fehlererkennung ausgewertet werden.

7. Verfahren nach Anspruch 5 oder 6, **dadurch gekennzeichnet, daß** für den Strom-Grundwert (I_{L}), für den mittleren Stromwert (I_{H1})und für den oberen Stromwert (I_{H2}) jeweils Toleranzbereiche vorgegeben werden.

8. Verfahren nach einem oder mehreren der Ansprüche 1 bis 7, **dadurch gekennzeichnet, daß** bei einer Radstillstanderkennung bzw. beim Ausbleiben der Drehzahlsensorpulse (P) über eine vorgegebene Zeitspanne (T) hinaus ein Hilfs-Synchronisierpuls (Sy2) erzeugt wird, der die Übertragung der Zusatzdaten (ZD; Bt0 bis Bt7; 0...5) auslöst.

9. Verfahren nach Anspruch 8, **dadurch gekennzeichnet, daß** die Amplitude des Hilfs-Synchronisierpulses (Sy2) im Toleranzbereich der mittleren Stromwerte (I_{H1}) liegt.

10. Verfahren nach Anspruch 8 oder 9, **dadurch gekennzeichnet, daß** beim Auftreten eines Drehzahlsensorpulses(P) während einer Übertragung von Zusatzdaten (ZD; Bt0 bis Bt7; 0...5) der Datenfluß unterbrochen und synchronisiert durch den Sensorpuls (P) erneut gestartet wird.

11. Verfahren nach einem oder mehreren der Ansprüche 1 bis 7, **dadurch gekennzeichnet, daß** die Zusatzdaten(ZD; Bt0 bis Bt7; 0...5) Informationen über den Bremsbelagverschleiß, über den Luftspalt zwischen dem Encoder und dem Meßwertaufnehmer, über den Einfederweg eines Schwingungsdämpfers, über den Reifendruck, über die Fahrtrichtung etc., und zwar eine oder mehrere dieser Informationen, enthalten.

12. Schaltungsanordnung mit Mitteln zur Durchführung des Verfahrens nach einem oder mehreren der Ansprüche 1 bis 11.

## Claims

1. Method of transmitting data, which is supplied by a rotational speed sensor in the form of an alternating signal, as well as additional data, by way of a joint signal line,
**characterized in that** a sequence of pulses (P) of a given duration is produced from the alternating signal (ES), and the intervals or interpulse periods contain the information on rotational speed, and **in that** the additional data (ZD) is transmitted in the interpulse periods, and the transmission of the additional data (ZD; Bt0 to Bt7); 0...5) is triggered or synchronized by the individual pulses (P).

2. Method as claimed in claim 1,
**characterized in that** the additional data (ZD) is included in a sequence of binary signals (Bt0 to Bt7; 0...5) or in a bit sequence that are transmitted following each rotational speed sensor pulse or synchronization pulse (P).

3. Method as claimed in claim 2,
**characterized in that** the additional data (ZD) is included in a bit sequence (Bt0 to Bt7; 0...5), the total duration of which is shorter than the interpulse periods between successive rotational speed sensor pulses (P) which occur at maximum rotational speed.

4. Method as claimed in any one or more of claims 1 to 3,
**characterized in that** the time basis for the sensor pulses (P) and for the binary signals (Bt0 to Bt7; 0...5) which contain the additional data (ZD) is produced by way of a common oscillator or clock pulse generator circuit (9).

5. Method as claimed in any one or more of claims 1 to 4,
**characterized in that** as a rotational speed sensor an active sensor (1) is used to supply the information on rotational speed in the form of load-independent currents, **in that** the additional data (ZD; Bt0 to Bt7; 0...5) is also transmitted by currents of predetermined amplitudes, and **in that** a basic current value (I_{L}) which is sufficient for the operation of the active sensor, a mean current value (I_{H1}) for the transmission of the additional data (ZD; Bt0 to Bt7; 0...5) and a top current value (I_{H2}) for the representation of the sensor pulses (P) are predetermined on the transmission line (3).

6. Method as claimed in claim 5,
**characterized in that** the fact that a value falls below a defined minimum current value (Iₘᵢₙ) and exceeds a maximum current value (Iₘₐₓ) on the transmission line is evaluated for error detection.

7. Method as claimed in claim 5 or claim 6,
**characterized in that** tolerance ranges are respectively predetermined for the basic current value (I_{L}), for the mean current value (I_{H1}) and for the top current value (I_{H2}).

8. Method as claimed in any one or more of claims 1 to 7,
**characterized in that** upon wheel standstill recognition and/or in the absence of the rotational speed sensor pulses (P) beyond a predetermined time period (T), an auxiliary synchronization pulse (Sy2) is generated which triggers the transmission of the additional data (ZD; Bt0 to Bt7; 0...5).

9. Method as claimed in claim 8,
**characterized in that** the amplitude of the auxiliary synchronization pulse (Sy2) lies in the tolerance range of the mean current values (I_{H1}).

10. Method as claimed in claim 8 or claim 9,
**characterized in that** when a rotational speed sensor pulse (P) appears during transmission of additional data (ZD; Bt0 to Bt7; 0...5), the data flow is interrupted and restarted, synchronized by the sensor pulse (P).

11. Method as claimed in any one or more of claims 1 to 7,
**characterized in that** the additional data (ZD; Bt0 to Bt7; 0...5) contains pieces of information about brake lining wear, the air slot between the encoder and the transducer, about the compression travel of a vibration damper, the tire pressure, the driving direction, etc., and namely one or more of these pieces of information.

12. Circuit arrangement including means for implementing the method as claimed in any one or more of claims 1 to 11.

## Revendications

1. Procédé de transmission de données que délivre un capteur de vitesse de rotation et qui se présentent sous forme d'un signal alternatif, ainsi que de données supplémentaires, sur une ligne de signaux commune, **caractérisé en ce qu'**à partir du signal alternatif (ES), il est déduit un train d'impulsions (P) de durée préfixée dont les espacements ou intervalles entre impulsions contiennent l'information de vitesse de rotation et **en ce que** les données supplémentaires (ZD) sont transmises dans les intervalles entre impulsions, la transmission des données supplémentaires (ZD ; Bt0 à Bt7 ; 0...5) étant démarrée ou synchronisée au moyen des différentes impulsions (P).

2. Procédé suivant la revendication 1, **caractérisé en ce que** les données supplémentaires (ZD) sont contenues dans un train de signaux binaires (Bt0 à Bt7 ; 0...5) ou dans une succession de bits qui sont transmis à la suite de chaque impulsion de capteur de vitesse de rotation ou impulsion de synchronisation (P).

3. Procédé suivant la revendication 2, **caractérisé en ce que** les données supplémentaires (ZD) sont contenues dans une succession de bits (Bt0 à Bt7 ; 0...5) dont la durée totale est plus courte que les intervalles entre impulsions, se présentant à la vitesse de rotation la plus élevée, qui séparent des impulsions de capteur de vitesse de rotation (P) qui se suivent.

4. Procédé suivant une ou plusieurs des revendications 1 à 3, **caractérisé en ce que** la base de temps pour les impulsions de capteur (P) et pour les signaux binaires (Bt0 à Bt7 ; 0...5) qui contiennent les données supplémentaires (ZD) est obtenue au moyen d'un circuit d'oscillateur ou circuit générateur d'horloge (9) commun.

5. Procédé suivant une ou plusieurs des revendications 1 à 4, **caractérisé en ce qu'**un capteur actif (1) qui délivre les informations de vitesse de rotation sous forme de courants indépendants de la charge, est utilisé en tant que capteur de vitesse de rotation, **en ce que** les données supplémentaires (ZD ; Bt0 à Bt7 ; 0...5) sont également transmises au moyen de courants d'amplitudes préfixées et **en ce qu'**il est préfixé, sur la ligne de transmission (3), une valeur de base de courant (I_{L}), qui suffit pour le fonctionnement du capteur actif, une valeur de courant moyenne (I_{H1}) pour la transmission des données supplémentaires (ZD ; Bt0 à Bt7 ; 0...5) et une valeur de courant supérieure (I_{H2}) pour la représentation des impulsions de capteur (P).

6. Procédé suivant la revendication 5, **caractérisé en ce que** le franchissement vers le bas d'une valeur minimale de courant (Iₘᵢₙ) préfixée déterminée et le franchissement vers le haut d'une valeur maximale de courant (Iₘₐₓ) préfixée sur la ligne de transmission sont analysés pour la constatation d'erreur.

7. Procédé suivant la revendication 5 ou 6, **caractérisé en ce que**, pour chacune des valeurs que sont la valeur de base de courant (I_{L}), la valeur de courant moyenne (I_{H1}) et la valeur de courant supérieure (I_{H2}), une fourchette de tolérance respective est préfixée.

8. Procédé suivant une ou plusieurs des revendications 1 à 7, **caractérisé en ce que**, lors d'une constatation d'état d'arrêt de roue ou lors de l'absence des impulsions de capteur de vitesse de rotation (P) sur une période de temps (T) préfixée, il est produit une impulsion de synchronisation auxiliaire (Sy2) qui déclenche la transmission des données supplémentaires (ZD ; Bt0 à Bt7 ; 0...5).

9. Procédé suivant la revendication 8, **caractérisé en ce que** l'amplitude de l'impulsion de synchronisation auxiliaire (Sy2) est située dans la fourchette de tolérance des valeurs de courant moyennes (I_{H1}).

10. Procédé suivant la revendication 8 ou 9, **caractérisé en ce que**, lorsqu'une impulsion de capteur de vitesse de rotation (P) se présente pendant une transmission de données supplémentaires (ZD ; Bt0 à Bt7 ; 0...5), le flux de données est interrompu et est de nouveau démarré d'une manière synchronisée au moyen de l'impulsion de capteur (P).

11. Procédé suivant une ou plusieurs des revendications 1 à 7, **caractérisé en ce que** les données supplémentaires (ZD ; Bt0 à Bt7 ; 0...5) contiennent des informations concernant l'usure de plaquette de frein, l'entrefer entre le codeur et le récepteur de valeur de mesure, la course de suspension d'un amortisseur, la pression de pneumatique, le sens de conduite, etc., et plus précisément une ou plusieurs de ces informations.

12. Agencement de circuit comportant des moyens pour la mise en oeuvre du procédé suivant une ou plusieurs des revendications 1 à 11.
